(19) Europäisches Patentamt
European Patent Office
Office européen des brevets

(11) **EP 1 331 056 B1**

(12) **EUROPÄISCHE PATENTSCHRIFT**

(45) Veröffentlichungstag und Bekanntmachung des Hinweises auf die Patenterteilung:
**01.04.2009  Patentblatt 2009/14**

(51) Int Cl.:
*B23D 61/12* (2006.01)   *B23D 61/14* (2006.01)
*B23D 65/00* (2006.01)   *C22C 29/08* (2006.01)
*C21D 9/24* (2006.01)   *C22C 38/12* (2006.01)
*C22C 38/22* (2006.01)

(21) Anmeldenummer: 03001512.7

(22) Anmeldetag: **23.01.2003**

(54) **Bimetall-Sägeband**

Bi-metal band saw blade

Lame de scie à ruban bimétallique

(84) Benannte Vertragsstaaten:
**AT DE GB SE**

(30) Priorität: **25.01.2002  DE 10202770**

(43) Veröffentlichungstag der Anmeldung:
**30.07.2003  Patentblatt 2003/31**

(73) Patentinhaber: **Stahlwerk Ergste Westig GmbH
58239 Schwerte (DE)**

(72) Erfinder:
• **Pacher, Oskar Dr.
8041 Graz (AT)**
• **Lenoir, Werner
59423 Unna (DE)**

(74) Vertreter: **König, Gregor Sebastian et al
König Szynka Tilmann von Renesse
Patentanwälte Partnerschaft
Postfach 11 09 46
40509 Düsseldorf (DE)**

(56) Entgegenhaltungen:
**EP-A- 0 452 526       EP-A- 0 569 349
EP-A- 0 580 349**

• **PATENT ABSTRACTS OF JAPAN vol. 1996, no. 12, 26. Dezember 1996 (1996-12-26) & JP 08 218145 A (SUMITOMO ELECTRIC IND LTD), 27. August 1996 (1996-08-27)**
• **PATENT ABSTRACTS OF JAPAN vol. 007, no. 118 (C-167), 21. Mai 1983 (1983-05-21) & JP 58 037156 A (DAIDO TOKUSHUKO KK), 4. März 1983 (1983-03-04)**

EP 1 331 056 B1

**Beschreibung**

Die Erfindung bezieht sich auf ein Bimetall-Sägeband, bei dem zumindest die Zahnspitzen aus einem Hartmetall und das Trägerband aus einem vergleichsweise zähen Stahl bestehen und nimmt die Priorität der deutschen Patentanmeldung 102 02 770.6-14 in Anspruch.

Sägebänder, unter denen vorliegend auch Sägeblätter zu verstehen sind, müssen eine hohe Formbeständigkeit ihrer Schneidkanten sowie eine hohe Verschleißfestigkeit besitzen und der hohen Beanspruchung durch Druck-, Biege- und Schubkräfte auch bei den nicht unerheblichen Temperaturen gewachsen sein, die sich aus der Reibung zwischen Sägeband und Schneidgut ergeben. Dies gilt namentlich für Sägebänder, die mit hoher Geschwindigkeit umlaufen und beim Umlenken einer starken Biegung unterliegen.

Da es schwierig ist, die erforderlichen Eigenschaften in einem einzigen Werkstoff zu vereinigen, bestehen Bimetall-Sägebänder heutzutage üblicherweise aus einem verhältnismäßig zähen Trägerband mit hoher Biegewechselfestigkeit und einem ebenfalls bandförmigen Schneidteil aus einem Schnellarbeits- oder Kaltarbeitsstahl mit geringer Zähigkeit, aber hoher Verschleißfestigkeit. Das Schneidband ist dabei so breit, daß sich daraus zumindest die Zahnspitzen des Sägebandes oder -blattes oder auch die Schneidzähne insgesamt herausarbeiten lassen.

Es ist bekannt, das Trägerband und das Schneidband durch Laser- oder Elektronenstrahlschweißen ohne Zusatzwerkstoff miteinander zu verbinden.

In der Praxis hat sich gezeigt, daß es unter dem Einfluß der Schweißwärme häufig zu einem Verzug der Zähne bzw. der Zahnspitzen kommt, so daß diese nicht mehr die vorgesehene Winkellage in bezug auf die Sägeband- bzw.

Sägeblattebene einnehmen und demzufolge einem wesentlich stärkeren Verschleiß unterliegen. Als Ursache hierfür konnten örtliche Konzentrationsunterschiede im Bereich der Schweißnaht festgestellt werden. Derartige Konzentrationsunterschiede und insbesondere der sich beim Verschweißen zweier unterschiedlich zusammengesetzter Werkstoffe zwangsläufig ergebende Konzentrationsgradient quer zur Schweißnaht führen häufig zu Restspannungen und damit zu einer Beeinträchtigung der Lebensdauer.

Aus der EP 0 569 346 A1 ist auch bereits ein Bimetall-Sägeband oder -blatt aus einem Stahl-Trägerband mit 0,20 bis 0,40% Kohlenstoff, 2,5 bis 5,0% Chrom, 2,0 bis 3,0% Molybdän, 0,03 bis 0,4% Vanadium sowie als Kornfeinungsmittel insgesamt unter 0,01% Niob und Titan einerseits sowie einem Schneidband aus einem Schnellarbeitsstahl mit 0,65 bis 1,8% Kohlenstoff, 3,0 bis 6,0% Chrom, 4,0 bis 12,0% Molybdän und 0,5 bis 5,0% Vanadium bekannt. Besonderes Kennzeichen dieses Sägebands ist die gleichzeitige Anwesenheit von Chrom, Vanadium und Molybdän in beiden Werkstoffen sowie die Begrenzung des Gesamtgehaltes an Niob und Titan im Trägerband auf höchstens 0,01% unter dem Gesichtspunkt einer ausreichenden Dauerwechselfestigkeit. Zur Verbesserung der Schweißbarkeit enthalten beide Werkstoffe zudem Aluminium, und zwar bis 2,0% im Schneidteil und bis 0,15% im Trägerband. EP-0 569349 A1 beschreibt ebenfalls ein ähnliches Bimetall-Sägeband.

Bekannt ist auch die Verwendung von Sinter-Hartmetall als Werkstoff für die Zahnspitzen eines Sägebandes. Derartige Hartmetalle bestehen im wesentlichen aus Wolframkarbid in einer Bettungsmasse aus 4 bis 15% Kobalt als Bindemetall, gegebenenfalls mit geringen Anteilen an Titan und Tantalkarbid. Die Verwendung von Hartmetallspitzen ist jedoch mit der Gefahr einer erhöhten Sprödigkeit und Bruchempfindlichkeit im Bereich der Schmelzverbindung zwischen den Hartmetall-Zahnspitzen und dem Stahl-Trägerband verbunden. Um dem entgegenzuwirken und eine höhere Zähigkeit bzw. besseren Druck- und Schlagempfindlichkeit zu gewährleisten, empfiehlt sich die Verwendung von Hartmetallen, die infolge eines feinkörnigen Gefüges eine höhere Härte und Zähigkeit besitzen. Das feinkörnige Gefüge geht jedoch verloren, weil es beim Schmelzverbinden der Schneidzähne mit dem Trägerband unter dem Einfluß der Schweißwärme oder auch im Betrieb unter dem Einfluß der beim Hochgeschwindigkeitssägen auftretenden Reibungswärme zu einem spontanen Kornwachstum durch Rekristallisation kommt. Dabei ist das Kornwachstum um so stärker, je geringer die Korngröße ist. Im Gefüge entstehen Inseln mit großen Wolframkarbid-Kristallen, die bei einer mechanischen und/oder dynamischen Belastung, d.h. bei hohen Schnittdrücken und Schnittgeschwindigkeiten bzw. Schwingungen das Entstehen von Brüchen begünstigen. Dieses Kornwachstum ist zudem mit dem Entstehen spröder Phasen und innerer Spannungen in der Schmelzzone beiderseits der Grenzfläche Hartmetall/Trägerband verbunden.

Um das bereits beim Sintern stattfindende Kornwachstum zu unterdrücken, ist es bekannt, dem Pulvergemisch Chrom, Vanadium und Niob- bzw. Tantalkarbide als Wachstumsinhibitoren zuzusetzen wie z.B. JP-8218145 A. Deren Wirkung geht jedoch beim Schmelzverbinden zumindest teilweise dadurch verloren, daß es unter dem Einfluß des Wärmeeinbringens zu einer Diffusion zwischen dem Schneidspitzen- und dem Trägerbandwerkstoff kommt.

Hier setzt die Erfindung ein, die auf ein Sägeband oder -blatt mit einem Schneidteil bzw. Schneidspitzen aus einem feinkörnigen Wolframkarbid-Hartmetall gerichtet ist, dessen Feinkörnigkeit auch unter dem Einfluß des Wärmeeinbringens beim Schmelzverbinden oder den hohen Temperaturen des Hochgeschwindigkeitsägens erhalten bleibt bzw. wegen der geringeren Gefahr einer Grobkornbildung weniger kühlendes Schmiermittel erfordert. Das Hartmetall besteht aus mindestens 75% Wolframkarbid und 5 bis 15% Kobalt sowie Kornstabilisatoren.

Der Trägerbandstahl ist erfindungsgemäß so zusammengesetzt, daß sich im Trägerband eine geringere Löslichkeit für Wolframkarbid aus der Fügezone ergibt. In diese Richtung wirken insbesondere Wolfram und Kupfer, während gleichzeitig der Kohlenstoffgehalt des Trägerbandes einem Kornwachstum des Wolframkarbids im Schneidspitzenwerkstoff entgegenwirkt. Kobalt im Trägerbandstahl erhöht hingegen die Löslichkeit des Wolframkarbids. Der Trägerbandstahl enthält daher vorzugsweise kein Kobalt oder allenfalls unter 0,2% Kobalt.

Ein Kornwachstum im Gefüge der Füge- bzw. Wärmeeinflußzone des feinkörnigen Hartmetalls und die damit verbundene Versprödung läßt sich erfindungsgemäß vermeiden, wenn das Trägerband aus einem Stahl mit möglichst geringer Löslichkeit für Wolframkarbid besteht. Dies ist der Fall, wenn der Trägerbandstahl Wolfram, Kupfer und Kohlenstoff einzeln oder nebeneinander in den Gehaltsgrenzen von 0,1 bis 2,0% Wolfram, 0,1 bis 1,0% Kupfer, 0,2 bis 0,45% Kohlenstoff und vorzugsweise unter 0,2% Kobalt enthält.

Sofern das Hartmetall der Schneidspitzen Kornstabilisatoren, beispielsweise 0,5 bis 5% mindestens eines der Karbide $Cr_3C_2$, VC und NbC und bis 3% Titan- und/oder Tantalkarbid enthält, ist es vorteilhaft, deren Löslichkeit im Trägerband dadurch entgegenzuwirken, daß das Trägerband die entsprechenden Karbidbildner, beispielsweise Chrom, Vanadium und Niob/Tantal in Gehalten von 1,0 bis 5,0% Chrom, 0,1 bis 0,5% Vanadium sowie 0,01 bis 0,30% Niob und/oder Tantal enthält. Besonders günstig sind 1,8 bis 4,0% Chrom, 0,1 bis 0,5% Vanadium und 0,01 bis 0,30% Niob und/oder Tantal oder auch 1,5 bis 2,5% Chrom.

Um eine synergistische Wirkung hinsichtlich der Schweißbarkeit und der Unterdrückung eines Kornwachstums zu gewährleisten, genügen die Gehalte des Trägerbandstahls an Wolfram, Vanadium, Niob/Tantal vorzugsweise der folgenden Bedingung:

$$SE = 1,5 \times (\%W) + 4 \,(\%V + \%Nb + \%Ta) \geq 1,5.$$

Dies gilt insbesondere bei einem Trägerband aus

| | |
|---|---|
| 0,20 bis 0,45% | Kohlenstoff |
| 0,2 bis 0,6% | Silizium |
| 0,5 bis 1,8% | Mangan |
| 0,1 bis 3,5% | Molybdän |
| 1,0 bis 5,0% | Chrom |
| 0,5 bis 15% | Nickel |
| 0,1 bis 0,5% | Kupfer |
| 0,1 bis 2,0% | Wolfram |
| 0,1 bis 0,5% | Vanadium |
| 0,01 bis 0,30% | Niob/Tantal |
| unter 0,2% | Kobalt, |

Rest Eisen einschließlich erschmelzungsbedingter Verunreinigungen, insbesondere bei einem Kobaltgehalt des Hartmetalls von 8 bis 12%, einem Gehalt an Kornstabilisatoren von 0,5 bis 5% und einer Korngröße unter 0,8 $\mu$m.

Das Trägerband kann auch aus

| | |
|---|---|
| 0,25 bis 0,40% | Kohlenstoff |
| 0,2 bis 0,50% | Silizium |
| 0,5 bis 1,5% | Mangan |
| 1,0 bis 3,5% | Molybdän |
| 1,8 bis 4,5% | Chrom |
| 0,5 bis 1,5% | Nickel |
| 0,1 bis 0,5% | Kupfer |
| 0,5 bis 2,0% | Wolfram |
| 0,1 bis 0,5% | Vanadium |
| 0,01 bis 0,30% | Niob/Tantal |
| unter 0,2% | Kobalt, |

Rest Eisen einschließlich erschmelzungsbedingter Verunreinigungen bestehen. Ein solches Trägerband eignet sich besonders für ein Hartmetall mit einem Kobaltgehalt von 8 bis 12% und einer Korngröße des Wolframkarbids unter 0,8 $\mu$m.

Der Trägerbandstahl kann jedoch auch

| | |
|---|---|
| 0,25 bis 0,32% | Kohlenstoff |
| 0,30 bis 0,45% | Silizium |
| 0,8 bis 1,5% | Mangan |
| 1,0 bis 2,5% | Molybdän |
| 1,5 bis 2,5% | Chrom |
| 0,5 bis 1,5% | Nickel |
| 0,1 bis 0,5% | Kupfer |
| 1,2 bis 1,8% | Wolfram |
| 0,1 bis 0,5% | Vanadium |
| 0,01 bis 0,30% | Niob/Tantal |
| unter 0,2% | Kobalt, |

Rest Eisen einschließlich erschmelzungsbedingter Verunreinigungen, vorzugsweise bei einem Kobaltgehalt von 8 bis 12% im Hartmetall und einer Korngröße des Wolframkarbids unter 0,4 $\mu$m enthalten.

Das erfindungsgemäße Sägeband läßt sich beispielsweise so herstellen, daß ein Stahlband durch spanabhebende Bearbeitung mit den Konturen eines Trägerbandes versehen und anschließend unter Zugspannung bei einer Temperatur von 1050 bis 1220°C austenitisierend geglüht wird. Von der Austenitisierungstemperatur wird das Band sodann mit einer Abkühlungsgeschwindigkeit von 300°C/min abgeschreckt und durch ein anschließendes 40 Minuten dauerndes Anlassen bei 500 bis 650°C auf eine Härte über HRC 48 gebracht. Das so vorbereitete Trägerband wird anschließend durch Schmelzschweißen mit zylindrischen Hartmetallkörpern versehen, die schließlich durch Schleifen in die gewünschte Schneidspitzenform gebracht werden.

Das fertige Sägeband oder -blatt kann abschließend noch einmal kurzzeitig, beispielsweise 15 min bei 560 °C angelassen werden.

Die Erfindung wird nachfolgend anhand von Ausführungsbeispielen und Zeichnungen des näheren erläutert. In der Zeichnung zeigen:

Fig. 1    ein konturiertes Trägerband,

Fig. 2    das Trägerband der Fig. 1 mit einem eingesetzten Hartmetallkörper,

Fig. 3    ein fertiges Sägeband,

Fig. 4    eine grafische Darstellung der Schnittleistung in Abhängigkeit von der Anzahl der Sägeschnitte bei normaler Kühlung und

Fig. 5    ein Fig. 4 ähnliches Diagramm für die Versuche mit reduzierter Kühlung.

Zum Herstellen von Hartmetallkörper wurden Submicron-WC-Pulver sowie ein Feinkorn-WC-Pulver mit jeweils 8% Kobalt als Pulvergranulat eingesetzt, d.h. als rieselfähiges Pulver, die direkt verpreßt werden können. Die Pulver enthielten bereits Zusätze von Kornstabilisatoren (H1 und H3, Tabelle II) und konnten direkt in einer hydraulischen Presse bei einem Druck von 320 MPa zu Zylindern mit ca. 3 mm Durchmesser verpreßt werden. Die Teile wurden anschließend in einem Vakuumsinterofen eingebracht und bei 1350 °C gesintert. Nach dem Sintern wurde das Gefüge der Proben H1 und H2 elektronenmikroskopisch untersucht und eine durchschnittele WC-Korngröße von 0,4 bzw. 0,8 $\mu$m ermittelte. Die Probe H3 zeigte im Lichtmikroskop eine WC-Korngröße von 2,5 $\mu$m.

Die dermaßen hergestellten Hartmetallzylinder konnten direkt für die Herstellung von Sägeblättern mittels Schmelzschweißen verwendet werden.

Bei Hartmetallen mit niedrigem Kobaltgehalt kann nach dem Sintern noch eine gewisse Restporosität verbleiben. Diese läßt sich durch ein isostatisches nachverdichten beseitigen, beispielsweise in einem Drucksinterofen bei 20 bar in Argon-Atmosphäre.

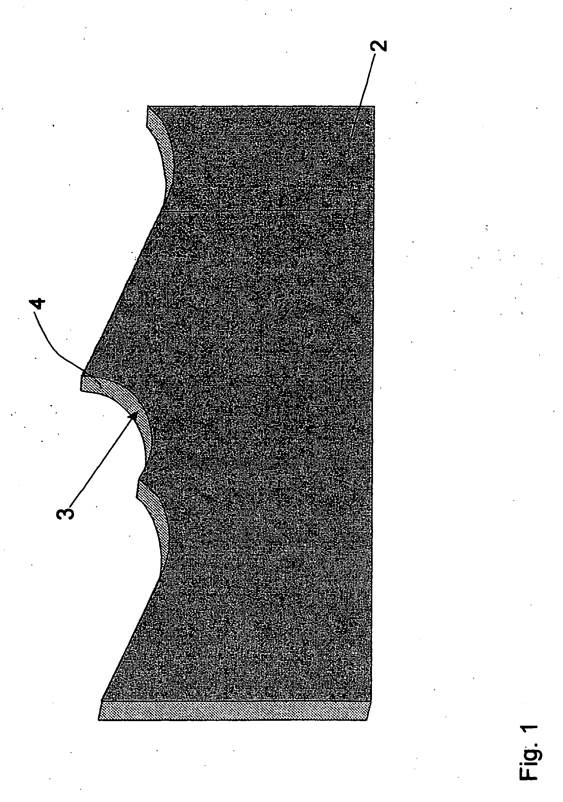

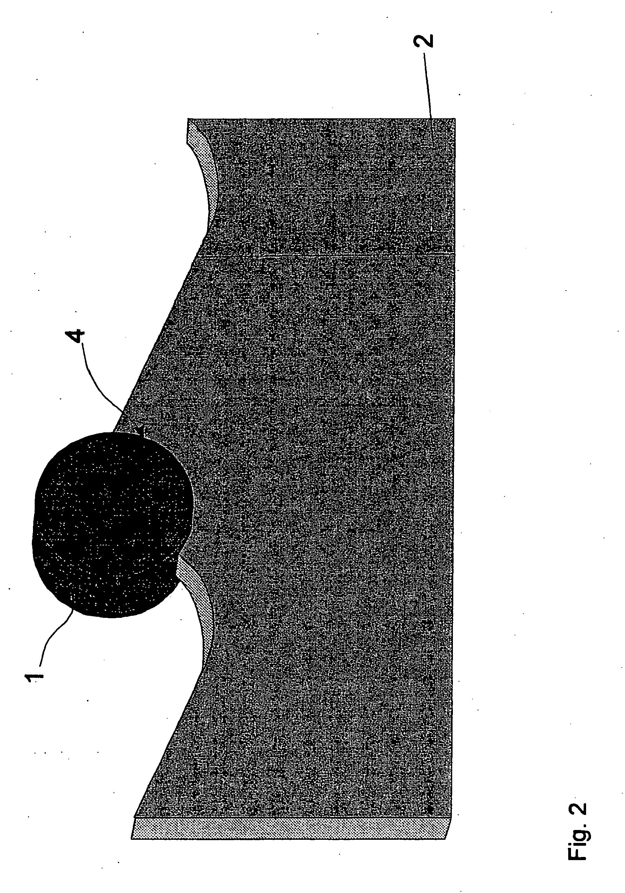

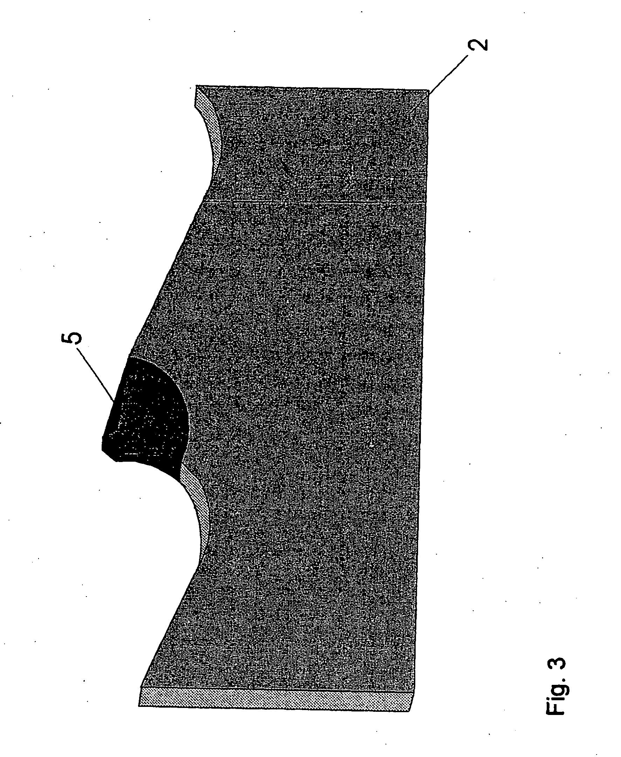

Trägerbänder aus erfindungsgemäßen Stählen TB1 und TB2 und nicht unter die Erfindung fallenden Vergleichsstählen TB3 und TB4 (Tabelle I) und den Hartmetallen H1 bis H3 mit unterschiedlicher WC-Korngröße (Tabelle II) wurden durch Schmelzkontaktierung zu Sägebandrohlingen verarbeitet. Dabei wurden zylindrische Hartmetallkörper 1 mit einem Durchmesser und einer Breite von 3 mm mit einer Kupferelektrode gegen ein in Fig. 1 dargestelltes Trägerband 2 mit Ausnehmungen 3 gedrückt und die Kontaktfläche 4 einige Millisekunden mit einem hohen Strom beaufschlagt. Dadurch kam es zu einer Schmelzverbindung zwischen dem Bindemetall (Kobalt) des Hartmetalls und dem Trägerbandstahl. Dabei entstand ein Bandrohling wie er in Fig. 2 dargestellt ist. Alternativ kann auch ein induktives Erwärmen zur Anwendung kommen. Die Füge- bzw. Verbindungszone wurde danach an Luft rasch abgekühlt und kurzzeitig auf 450 bis 550°C angelassen. Aus den Sägebandrohlingen (Fig. 2) wurden durch Schleifen mit Diamantscheiben Versuchssägebänder S1 bis S7 (Tabelle III) mit Zahnspitzen 5 entsprechend der Darstellung in Fig. 3 hergestellt. Diese Sägebänder wurden zur Bestimmung der Schnittleistung SL mit Hilfe eines weichgeglühten, karbidreichen PM-Stahls der Stahlmarke Werkstoff A11 nach AISI-Norm (Handelsname CPM 10 V) verwendet. Die geschnittene Fläche betrug jeweils 110 cm$^2$, die Schnittgeschwindigkeit 85m/min. Für die Ermittlung der Schnittleistung SL wurde die für die jeweilige Schnittfläche benötigte Zeit ermittelt und entsprechend der Formel: SL = Fläche/Zeit berechnet.

Um die Beständigkeit der Sägebänder unter verschärften thermischen Bedingungen zu testen, wurden die Versuche unter sonst gleichen Bedingungen mit nur 10% der normalen Kühlmittelmenge durchgeführt (reduzierte Schmiermittelkühlung).

Die Versuche 1 bis 4 und 8 bis 11 wurden mit erfindungsgemäßen Sägebändern durchgeführt, die Versuche 5 bis 7 und 12 bis 14 mit Vergleichsbändern.

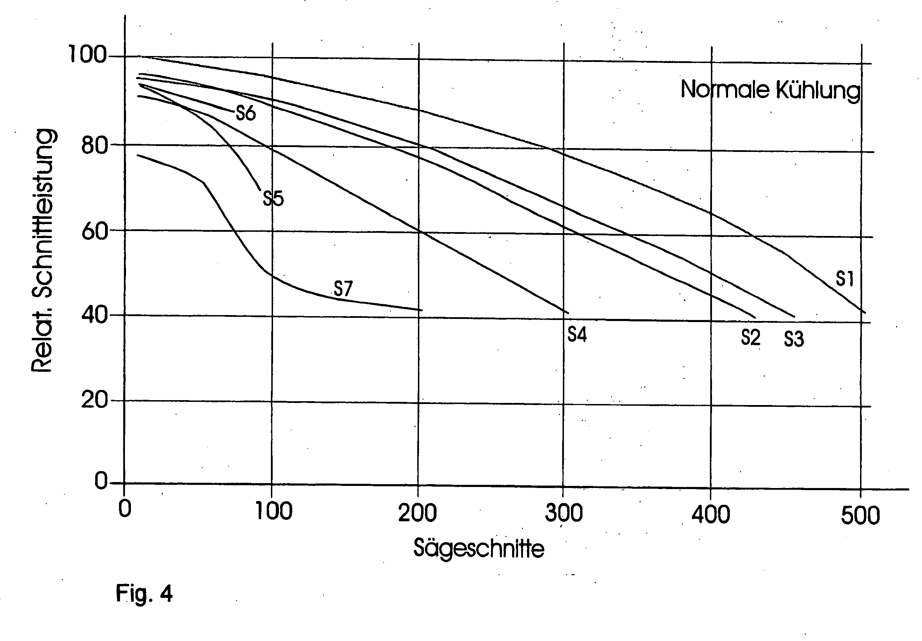

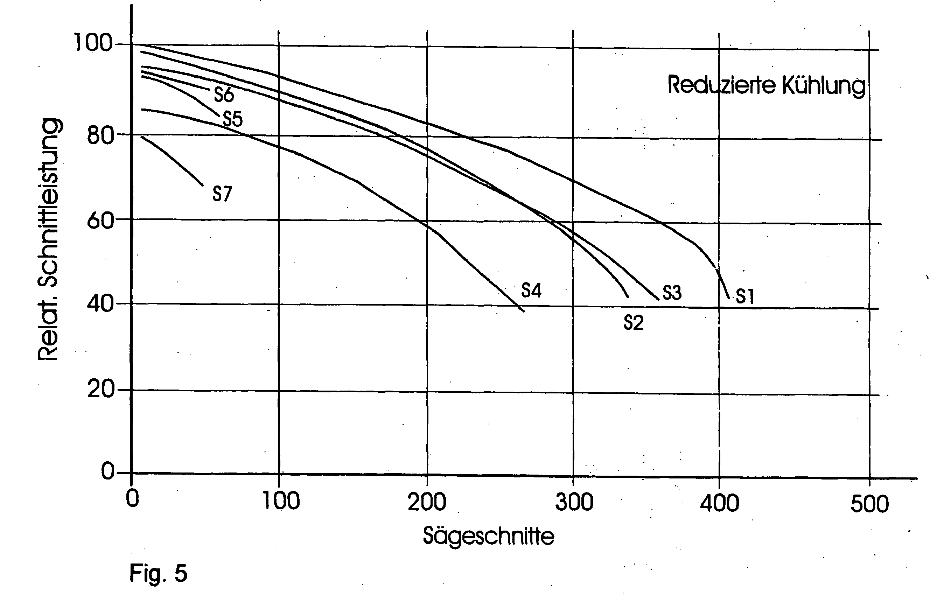

Die Schnittleistungen der Versuche 1 bis 7 sind für eine normale Schmiermittelkühlung im Diagramm der Fig. 4 und in Fig. 5 für eine reduzierte Kühlmittelzufuhr dargestellt. Tabelle III gibt die Werte der relativen Schnittleistung der Sägebänder nach 100 Schnitten sowie die Anzahl der erreichten Schnitte für die Versuchsbänder wieder.

Bei den Versuchen 1 bis 7 sowie 8 bis 14 wurde die Anfangsschnittleistung des Sägebandes S1 jeweils mit 100% angesetzt. Da die Schnittleistung (geschnittene Fläche/min) aufgrund des Verschleißes mit der Anzahl der Sägeschnitte abnimmt, wurden alle Versuche bei Erreichen von 40% relativer Schnittleistung abgebrochen. Die Versuche mit den Sägebändern S5 bis S7 mußten wegen Zahnbruchs vorzeitig abgebrochen werden.

Die Überlegenheit der erfindungsgemäßen Sägebänder, insbesondere bei den Feinkornhartmetallen H1 und H2, ist auf die vorteilhafte Zusammensetzung des Trägerbandes zurückzuführen. Die Ergebnisse bei reduzierter Kühlschmierung (Fig. 5) sind ein Hinweis auf die verbesserte Warmfestigkeit, bei hoher Verschleißfestigkeit und hoher Schnittleistung der erfindungsgemäßen Sägebänder.

Die hohen Schnittleistungen und Standzeiten der erfindungsgemäßen Sägebänder S1 bis S4 beruhen auf einer synergistischen Wechselwirkung zwischen den Eigenschaften des Trägerbandes und den Eigenschaften der Schmelzfügezone (Wärmeeinflußzone) sowie des Feinkornhartmetalls. Daran, daß die erfindungsgemäßen Sägebänder S1 bis S4 sowohl bei normaler Kühlung (Fig. 4) als auch bei reduzierter Kühlung (Fig. 5) im Vergleich mit den nicht unter die Erfindung fallenden Sägebändern S5 bis S7 sehr hohe Schnittleistungen erbringen, zeigt sich die sehr gute mechanische und thermische Belastbarkeit der Sägebänder.

Die erfindungsgemäßen Sägebänder unterliegen auch unter verschärften Bedingungen keinem Zahn- oder Bandbruch und erbringen generell hohe Schnittleistungen. Hingegen sind die Ergebnisse der Sägebänder S5 bis S7 mit den außerhalb der Erfindung liegenden Trägerbändern TB3 und TB4 sehr schlecht.

Die Entwicklung bei der Zerspanung geht in Richtung einer möglichst weitgehenden Reduzierung des Kühlmittelverbrauchs. Besonders Öl-Emulsionen enthalten toxische Zusätze (Bakterizide, Fungizide) und verursachen hohe Wartungs-, Entsorgungs- und Betriebskosten. Da aber häufig eine Kühlung unerläßlich ist, sollte die notwendige Kühlmittelmenge möglichst gering sein, um den Wartungsaufwand (Überwachung der Stabilität der Emulsion, chemische Analysen, Verbrauch von Stabilisatoren, Durchmischung und Durchlüftung usw.) gering zu halten.

Ein Arbeiten mit geringen Schmiermittelmengen ist jedoch nur möglich, wenn die Warmfestigkeit der Sägebänder dies erlaubt. Bei Bandsägen soll deshalb das Trägerband möglichst warmfest sein.

*Tabelle I*

| Leg. | C (%) | Si (%) | Mn (%) | Mo (%) | Cr (%) | Ni (%) | W (%) | V (%) | Nb (%) | Cu (%) | SE |
|------|-------|--------|--------|--------|--------|--------|-------|-------|--------|--------|------|
| TB1 | 0,32 | 0,30 | 1,05 | 1,10 | 4,0 | 0,75 | 0,10 | 0,32 | 0,10 | 0,20 | 1,83 |
| TB2 | 0,30 | 0,38 | 1,08 | 1,50 | 2,0 | 0,95 | 1,50 | 0,28 | 0,10 | 0,15 | 3,77 |
| TB3 | 0,34 | 0,35 | 0,95 | 0,95 | 2,8 | 0,70 | 0,10 | 0,22 | 0,02 | 0,02 | 1,15 |
| TB4 | 0,29 | 0,20 | 0,40 | 2,40 | 3,8 | 0,45 | 0,05 | 0,21 | 0,01 | 0,04 | 1,00 |

*Tabelle II*

| Hartmetall | Mittlere WC-Korngröße (μm) | Co (%) | Kornstabilisatoren | (%) | Härte HV30 | Biegebruchfestigkeit (N/mm$^2$) |
|---|---|---|---|---|---|---|
| H1 | 0,4 | 8 | $Cr_3C_2$, VC, NbC | 3,0 | 1900 | 3510 |
| H2 | 0,8 | 8 | $Cr_3C_2$, VC | 1,5 | 1500 | 2600 |
| H3 | 2,5 | 8 | TiC, TaC | 0,5 | 1400 | 2000 |

*Tabelle III*

| Versuch Nr. | Sägeband | Kombination | Kühlmittelmenge (%) | Anzahl Schnitte | Rel. Schnittleistung nach 100 Schnitten |
|---|---|---|---|---|---|
| 1 | S2 | TB2/H1 | 100 | 506 | 96 |
| 2 | S1 | TB1/H1 | 100 | 323 | 90 |
| 3 | S3 | TB2/H2 | 100 | 463 | 91 |
| 4 | S4 | TB2/H3 | 100 | 305 | 79 |
| 5 | S5 | TB3/H1 | 100 | 94 | Zahnbruch |
| 6 | S6 | TB4/H1 | 100 | 76 | Zahnbruch |
| 7 | S7 | TB4/H2 | 100 | 202 | 50 |
| 8 | S2 | TB2/H1 | 10 | 410 | 94 |
| 9 | S1 | TB1/H1 | 10 | 342 | 90 |
| 10 | S3 | TB2/H2 | 10 | 361 | 88 |
| 11 | S4 | TB2/H3 | 10 | 265 | 77 |
| 12 | S5 | TB3/H1 | 10 | 63 | Bandbruch |
| 13 | S6 | TB4/H1 | 10 | 51 | Zahnbruch |
| 14 | S7 | TB4/H2 | 10 | 40 | Zahnbruch |

**Patentansprüche**

1. Bimetall-Sägeband, **gekennzeichnet durch** ein Trägerband aus einem Stahl mit 0,2 bis 0,45% Kohlenstoff, 1,0 bis 5,0% Chrom, 0,1 bis 0,5% Vanadium, 0,01 bis 0,30% Niob und/oder Tantal, 0,1 bis 2,0% Wolfram und/oder 0,1 bis 1,0% Kupfer sowie unter 0,2% Kobalt sowie Hartmetallspitzen aus mindestens 25% Wolframkarbid, 5 bis 15% Kobalt und 0,5 bis 5% mindestens eines der Karbide $Cr_3C_2$, VC und NbC und bis 3% Titan- und/oder Tantalkarbid als Kornstabilisatoren mit einer Korngröße der Wolframkarbide unter 5 μm.

2. Sägeband nach Anspruch 1, **gekennzeichnet durch** ein Trägerband mit 1,8 bis 4,0% Chrom, 0,1 bis 0,5% Vanadium sowie 0,01 bis 0,30% Niob und/oder Tantal einzeln oder nebeneinander.

3. Sägeband nach Anspruch 1 oder 2, **gekennzeichnet durch** ein Trägerband mit 1,5 bis 2,5% Chrom.

4. Sägeband nach einem der Ansprüche 1 bis 3, **dadurch gekennzeichnet, daß** die Gehalte an Wolfram, Vanadium und Niob im Trägerband der Bedingung:

$$SE = 1{,}5 \text{ x } (\% \text{ W}) + 4 \ (\% \text{ V} + \% \text{ Nb}) \geq 1{,}5.$$

genügen.

5. Sägeband nach einem der Ansprüche 1 bis 4, **dadurch gekennzeichnet, daß** die Korngröße der Hartmetallspitzen unter 0,8 $\mu$m liegt.

6. Sägeband nach Anspruch 5, **dadurch gekennzeichnet, daß** die Korngröße unter 0,1 $\mu$m liegt.

7. Verfahren zum Herstellen eines Sägebandes nach einem der Ansprüche 1 bis 6, **dadurch gekennzeichnet, daß** ein Stahlbandrohling mit den Konturen eines Trägerbandes versehen und unter Zugspannung bei 1050 bis 1220°C austenitisierend geglüht, mit einer Abkühlungsgeschwindigkeit von über 300°C/min abgeschreckt und bei 500 bis 600°C angelassen sowie mit Hartmetallspitzen bestückt wird.

8. Verwendung eines Sägebandes nach einem der Ansprüche 1 bis 7 zum Trennen von Werkstoffen hoher Härte und Verschleißfestigkeit mit Schnittgeschwindigkeiten von mindestens 45 m/Min.

## Claims

1. Bi-metal saw band, **characterised by** a carrier band made of a steel with 0.2 to 0.45% carbon, 1.0 to 5.0% chromium, 0.1 to 0.5% vanadium, 0.01 to 0.30% niobium and/or tantalum, 0.1 to 2.0% tungsten and/or 0.1 to 1.0% copper, as well as less than 0.2% cobalt, as well as hard metal points of at least 25% tungsten carbide, 5 to 15% cobalt and 0.5 to 5% at least of one of the carbides $Cr_3C_2$, VC and NbC and up to 3% titanium carbide and/or tantalum carbide as grain stabilizers, with a grain size of the tungsten carbides of less than 5 $\mu$m.

2. Saw band according to Claim 1, **characterised by** a carrier band with 1.8 to 4.0% chromium, 0.1 to 0.5% vanadium and 0.01 to 0.30% niobium and/or tantalum, individually or mixed.

3. Saw band according to Claim 1 or 2, **characterised by** a carrier band with 1.5 to 2.5% chromium.

4. Saw band according to any one of Claims 1 to 3, **characterised in that** the contents of tungsten, vanadium and niobium in the carrier band fulfil the condition:

$$SE = 1.5 \text{ x } (\%W) + 4 (\%V + \%Nb) >= 1.5$$

5. Saw band according to any one of Claims 1 to 4, **characterised in that** the grain size of the hard metal points is less than 0.8 $\mu$m.

6. Saw band according to Claim 5, **characterised in that** the grain size is less than 0.1 $\mu$m.

7. Method for the manufacture of a saw band according to any one of Claims 1 to 6, **characterised in that** a steel strip blank with the contours of a carrier band is provided and annealed under tensile stress at 1050 to 1220 °C to become austenized, quenched at a cooling rate of more than 300 °C/min and tempered at 500 to 600 °C, as well as being fitted with hard metal points.

8. Use of a saw band according to any one of Claims 1 to 7 for the cutting off of materials of high hardness and wear resistance with cutting speeds of at least 45 m/min.

## Revendications

1. Ruban de scie bimétallique, **caractérisé par** un ruban de support réalisé dans un acier contenant 0,2 à 0,45 % de carbone, 1,0 à 5,0 % de chrome, 0,1 à 0,5 % de vanadium, 0,01 à 0,30 % de niobium et/ou de tantale, 0,1 à 2,0 % de tungstène et/ou 0,1 à 1,0 % de cuivre ainsi que moins de 0,2 % de cobalt, ainsi que par des pointes en métal dur composées d'au moins 25 % de carbure de tungstène, de 5 à 15 % de cobalt et de 0,5 à 5 % d'au moins un des carbures $Cr_3C_2$, VC et NbC et jusqu'à 3 % de carbure de titane et/ou de tantale en tant que stabilisateurs de grain avec une grosseur de grain des carbures de tungstène inférieure à 5 $\mu$m.

**2.** Ruban de scie selon la revendication 1, **caractérisé par** un ruban de support contenant 1,8 à 4,0 % de chrome, 0,1 à 0,5 % de vanadium ainsi que 0,01 à 0,30 % de niobium et/ou de tantale séparément ou simultanément.

**3.** Ruban de scie selon la revendication 1 ou 2, **caractérisé par** un ruban de support contenant 1,5 à 2,5 % de chrome.

**4.** Ruban de scie selon l'une des revendications 1 à 3, **caractérisé en ce que** les teneurs en tungstène, vanadium et niobium du ruban de support satisfont à la condition :

$$SE = 1,5 \ x \ (\% \ W) + 4 \ (\% \ V + \% \ Nb) \geq 1,5.$$

**5.** Ruban de scie selon l'une des revendications 1 à 4, **caractérisé en ce que** la grosseur de grain des pointes en métal dur est inférieure à 0,8 $\mu$m.

**6.** Ruban de scie selon la revendication 5, **caractérisé en ce que** la grosseur de grain est inférieure à 0,1 $\mu$m.

**7.** Procédé de fabrication d'un ruban de scie selon l'une des revendications 1 à 6, **caractérisé en ce qu'**une ébauche de ruban d'acier est pourvue des contours d'un ruban de support et austénitisée par recuit sous contrainte de traction à une température de 1050 à 1220 °C, trempée avec une vitesse de refroidissement supérieure à 300 °C/min et revenue à une température de 500 à 600 °C ainsi qu'équipée de pointes en métal dur.

**8.** Utilisation d'un ruban de scie selon l'une des revendications 1 à 7 pour couper des matériaux de dureté et de résistance à l'usure élevées avec des vitesses de coupe d'au moins 45 m/min.

Fig. 1

Fig. 2

Fig. 3

Fig. 4

EP 1 331 056 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10202770614
- EP 0569346 A1
- JP 8218145 A